# EUROPÄISCHE PATENTSCHRIFT

(11) **EP 0 660 086 B1**
(45) Veröffentlichungstag und Bekanntmachung des Hinweises auf die Patenterteilung: **12.01.2000**
(21) Anmeldenummer: 94118594.4
(22) Anmeldetag: 25.11.1994
(51) Int. Cl.: G01D 5/34, G01B 11/24

(54) **Optische Messvorrichtung**
Optical measuring device
Dispositif de mesure optique

(30) Priorität: 20.12.1993 DE 4343549
(43) Veröffentlichungstag der Anmeldung: 28.06.1995
(73) Patentinhaber: A.G. für industrielle Elektronik AGIE Losone bei Locarno, CH-6616 Losone (CH)
(72) Erfinder: Bertholds, Axel, Dr., CH-6654 Cavigliano (CH); Braunschweiler, Andreas, CH-6614 Brissago (CH)
(74) Vertreter: Turi, Michael, Dipl.-Phys.

(56) Entgegenhaltungen:
- EP-A- 0 532 933
- US-A- 4 166 950
- FEINWERKTECHNIK + MESSTECHNIK, Bd. 89, Nr. 2, März 1981, DE, Seiten 87-89, XP002014923 H.BUSCHMANN: "Optische Wegmesssonde"

## Beschreibung

Die Erfindung betrifft eine optische Fein- und Mikrobeschickungsmeßvorrichtung zur Positionierung um eine Aufnahmevorrichtung herum.

Bei der automatischen Beschickung einer Aufnahmevorrichtung mit Hilfe eines Industrieroboters ergibt sich das Problem einer genügend genauen Lagebestimmung der zu beschickenden Aufnahmevorrichtung. Insbesondere im Bereich der Mikrobeschickung bzw. der Mikromontage - wo beispielsweise Zahnräder kleinster Abmessung auf feinste stiftartige Aufnahmevorrichtungen zu setzen sind (Uhrenindustrie) - sind noch keine zufriedenstellend genau arbeitenden optischen Meßvorrichtungen bekannt. Die Beschickung erfolgt daher zumindest in der Uhrenindustrie auch heute noch von Hand, oder wenn maschinell, dann nicht mit wünschenswerter Genauigkeit. Wegen der Ungenauigkeiten ergeben sich fehlerhafte Beschickungen oder gar Beschädigungen der zu beschickenden Gegenstände.

Die Druckschrift "optische Wegmeßsonde", von H. Buschmann, in Feinwerktechnik & Meßtechnik 89, Jg. 1981, 2, S. 87-89, zeigt eine Meßvorrichtung zur Positionskontrolle von Blechbändern und Montageteilen. Die Meßvorrichtung ist gabelförmig ausgebildet, wobei das zu messende Objekt in den zwischen den beiden Gabelenden definierten Meßspalt eingetaucht wird. Wenn das Objekt nicht selbst in den Meßspalt eintauchen kann, muß in der Regel eine leichte steife Meßfahne am Objekt angebracht werden. Das Meßprinzip sieht somit vor, daß das zu messende Objekt von dem offenen Ende der gabelförmigen Meßvorrichtung in den Meßspalt eintaucht, wobei es je nach "Eintauchtiefe" in die Gabelöffnung einen mehr oder weniger großen Bereich zwischen den Gabelenden abdunkelt. Das in der Meßvorrichtung enthaltene Photoelement mißt eine von einer Lichtquelle ausgesandte Lichtmenge, wobei diese gemessene Lichtmenge anschließend mit der "Eintauchtiefe" korreliert wird. Damit ist eine Positionsbestimmung unmöglich, wenn sich das zu messende Objekt bereits vollständig in dem Meßspalt befindet, da die von dem jeweiligen Photoelement empfangene Lichtmenge. stets gleich ist, wo auch immer sich das Meßobjekt innerhalb der Gabelöffnung befindet.

EP-A-0 532 933 zeigt eine Meßvorrichtung zur Messung der Position, insbesondere der Abnutzung einer rotierenden Klinge. Die Meßvorrichtung weist eine Lichtquelle, zwei Linsensysteme, zwei Prismen und einen Lichtdetektor auf. Mit Hilfe der Prismen wird das Licht um 90° umgelenkt und fokussiert. Der Lichtdetektor mißt die empfangene Lichtmenge, die proportional zu der Position der rotierenden Klinge in Z-Richtung ist, also abhängig von der "Eintauchtiefe" der Klinge in den zwischen den beiden Prismen ausgebildeten Meßbereich.

Die US-A-4 166 950 zeigt eine Vorrichtung zum Messen der Position eines transparenten lichtstreuenden Bauteils zwischen einer Lichtquelle und einem Lichtdetektor. Die von dem Bauteil erzeugte Streulichtintensität ist in einem bestimmten Bereich proportional zur Position des lichtstreuenden Bauteils zwischen Lichtquelle und Lichtdetektor, da der Anteil des nach vorne gestreuten und vom Lichtdetektor empfangenen Lichtes sich ändert. Damit erfaßt der Lichtdetektor also eine Gesamtlichtintensität, die proportional zur Position des Bauteils ist.

Die Erfindung zielt aus diesem Grunde darauf ab, eine für einen Einsatz im Bereich der Fein- und/oder Mikrobeschikkung geeignete optische Meßvorrichtung zu schaffen. Ein weiteres Ziel der Erfindung besteht darin, ein für die Fein- und Mikrobeschickung geeignetes Verfahren zur Bestimmung der Lage und/oder der Form einer mit einem Körper zu beschickenden Aufnahmevorrichtung zu schaffen.

Im Hinblick auf die Meßvorrichtung erreicht die Erfindung ihr Ziel durch den Gegenstand des Anspruches 1.

In Hinsicht auf das Verfahren wird das Ziel der Erfindung durch den Gegenstand des Anspruches 12 erreicht.

Eine im Prinzip ähnlich arbeitende Meßeinrichtung ist aus dem technischen Gebiet der Elektroerosion bekannt (siehe z.B. die EP 0 312 056). Die in dieser Schrift gezeigte optische Meßvorrichtung wird allerdings ausschließlich zur Bestimmung der Lage eines Erodierdrahtes einer Drahterodiermaschine eingesetzt. Die Meßvorrichtung weist eine Licht absorbierende wirksame Fläche mit einer sich streng monoton ändernden geometrischen Gestalt auf. Hierdurch wird ein im mathematischen Sinne umkehrbar eindeutiger Zusammenhang zwischen der Auslenkung der Laufdrahtelektrode und der absorbierten Lichtmenge erreicht, welcher wiederum eine Bestimmung der Drahtlage erlaubt. Die Erfindung ermöglicht demgegenüber den Einsatz optischer Meßvorrichtungen auch im Bereich der Fein- und Mikrobeschickung.

Bei einer weiteren besonders bevorzugten Ausführungsform der Erfindung weist die optische Meßvorrichtung wenigstens eine der Lichtquelle und/oder der Sensoranordnung zugeordnete optische Ab- bzw. Umlenkeinheit auf, insbesondere nach Art eines Ablenkreflektors (siehe Anspruch 2). Basierend auf dieser Idee ist eine besonders kompakte Bauweise des optischen Meßsensors realisierbar, denn Lichtquelle und Sensoreinheit müssen sich nicht mehr einander gegenüberliegen, sondern sind auch parallel nebeneinander plazierbar. Dazu ist es lediglich notwendig, sowohl hinter der Lichtquelle als auch vor dem Lichtsensor jeweils einen 90°-Reflektor anzuordnen. Eine kompakte Bauweise kommt dem Einsatz in der Mikrotechnik in besonderem Maße zu Gute, wo das Einsparen von Platz und Raum aufgrund der geringen Abmessungen der zu beschickenden Aufnahmevorrichtungen ein wesentliches Moment ist.

Bei einer weiteren besonders bevorzugten Ausführungsform der Erfindung weist die Meßvorrichtung zwei winklig zueinander angeordnete Meßeinheiten mit Lichtquelle und Sensor auf (Anspruch 3). Mit einer derartigen Anordnung zweier Meßeinheiten ist nicht nur eine Lagebestimmung in einer, sondern sowohl in X- als auch in Y- Richtung möglich.

Eine weitere besonders bevorzugte Ausführungsform der Erfindung zeichnet sich dadurch aus, daß die Meßeinheiten orthogonal zueinander in einem zu einer seiner Seiten hin offenen Meßkopf angeordnet sind, so daß der Meßkopf über die auszumessende Aufnahmevorrichtung führbar ist (Anspruch 4). Mit dieser Ausführungsform ist es in besonders vorteilhafter Weise möglich, beispielsweise die Lage kleiner zylindrischer Nadeln zu bestimmen. Alternativ können auch drei oder mehr Meßeinheiten winklig zueinander angeordnet werden.

Die zylindrischen Nadeln werden - wie bereits vorstehend erwähnt - beispielsweise in der Uhrenindustrie als Aufnahmeeinheit für kleine Zahnräder verwendet. Nach den Stand der Technik war es bisher nur möglich, derartige Zahnräder (im Größenbereich von z.B. 1 mm) per Hand zu montieren bzw. aufzusetzen. Die Erfindung erlaubt demgegenüber eine weitgehende Automatisierung dieses Vorganges durch eine automatische Positions- und/oder Formkontrolle der Aufnahmevorrichtung. Eine Automatisierung war bisher u.a. auch deshalb problematisch, weil die Aufnahmevorrichtungen durch fehlerhafte Beschickungen verbogen oder verformt waren. Mit der Erfindung kann z.B. durch ein Hoch- und Runterfahren des Sensors auch eine Verformung der Aufnahmevorrichtung bestimmt werden.

Bei einer weiteren vorteilhaften Variante der Erfindung weist (weisen) der/die Sensor(en) zwei gegenläufig dreickförmige optische Einrichtungen - insbesondere Linsen - auf, die über eine Kopplungseinrichtung jeweils an eine Glasfaserleitung angeschlossen sind (Anspruch 5). Die Dreieckform bedingt in vorteilhafter Weise einen linearen Zusammenhang zwischen absorbierter Lichtmenge und Position der Aufnahmevorrichtung. Markant ist ferner der apparativ unkomplizierte Aufbau, der dem Einsatz in der Fein- und Mikrobeschickung in besonderer Weise entgegenkommt. Bei einer vorteilhaften Weiterbildung der Erfindung sind die Eintrittsebenen der - hier eher trapezförmigen - Linsen ferner mit einer eine rechteckige Öffnung aufweisenden Maske abgedeckt (Anspruch 6). Durch die dreieckförmigen Maske wird eine präzise Dreiecksform der Eintrittsebene des Lichtes in den Sensor bedingt, ohne daß es nötig wäre, die Linsen an sich im µm-Bereich genau dreieckförmig zu schleifen.

Aufgrund der vorteilhaften optischen Eigenschaften bzgl. des Strahlenganges ist bei einer weiteren Ausführungsform der Erfindung der wenigstens eine Reflektor als Prisma ausgebildet (Anspruch 7).

Eine weitere besonders vorteilhafte Weiterbildung findet die Erfindung durch eine an die Sensoren angeschlossene Auswertungseinrichtung, die zur Bestimmung der Position des Objektes im Raum ausgelegt ist (Anspruch 8). Die Auswertungseinrichtung (z.B. nach Art einer Softwareauswertung) verarbeitet die Meßsignale der X- und Y-Richtungen zu einer Koordinatenangabe des Ortes des zu messenden Gegenstandes.

Bei einer weiteren bevorzugten Variante der Erfindung ist die Meßvorrichtung an einem Roboterarm angeordnet (Anspruch 9). Aufgrund der insbesondere durch die Ablenkprismen bedingten kompakten Bauweise der Meßvorrichtung nach Art eines "Meßkopfes" ist die Erfindung für eine automatische Roboterbeschickung besonders geeignet. Eine vorteilhafte Möglichkeit der Erfindung ist entsprechend eine Verwendung einer optischen Meßvorrichtung nach vorstehender Art zur Messung der Lage eines von einem Industrieroboter zu bearbeitenden Gegenstandes (siehe Anspruch 14).

Bei einer weiteren bevorzugten Ausführungsform der Erfindung weist die Lichtquelle einen Laser oder ein LED auf, dessen/deren Licht über eine Glasfaserleitung sowie eine Linse abstrahlbar ist (Anspruch 10).

Bei einer weiteren, die Variante des Anspruches 10 in vorteilhafter Weise ergänzenden, Variante weist die Sensoranordnung zwei gegenläufig aneinanderliegende Linsen auf, wobei jeweils eine Glasfaserleitung von den Linsen wegführt (siehe Anspruch 11).

Das erfindungsgemäße Verfahren findet eine vorteilhafte Weiterbildung dadurch, daß anhand der Meßsignale zunächst bestimmt wird, ob eine Aufnahmevorrichtung vorhanden ist, woraufhin ggf. ein Vergleich deren Lage mit einem vorgegebenen Toleranzbereich und eine genaue Bestimmung der Lage des Stiftes und ggf. eine Ermittlung eines Korrekturwertes erfolgt (Anspruch 13). Diese Variante der Erfindung stellt eine vorteilhafte Methode zum Einsatz der Erfindung beispielsweise bei der Beschickung der vorstehend bereits erwähnten Nadeln in der Uhrenindustrie dar.

Weitere Vorteile der Erfindung ergeben sich aus der nachfolgenden Beschreibung bevorzugter Ausführungsbeispiele. In der Zeichnung zeigt:
- Fig. 1: eine schematisch perspektivische Ansicht eines ersten Ausführungsbeispiels der Erfindung;
- Fig. 2: anhand eines Diagrammes das Ergebnis einer mit einer erfindungsgemäßen Meßvorrichtung durchgeführten Messung;
- Fig. 3: anhand eines weiteren Diagrammes das Ergebnis weiterer mit einer erfindungsgemäßen Meßvorrichtung durchgeführter Messungen;
- Fig. 4: eine Aufnahmevorrichtung für Uhrenzahnräder;
- Fig. 5: eine teilweise geschnittene Ansicht eines weiteren Ausführungsbeispiels der Erfindung;
- Fig. 6a-e: schematische Ansichten verschiedener Ausführungsbeispiele von Sensorlinsen.

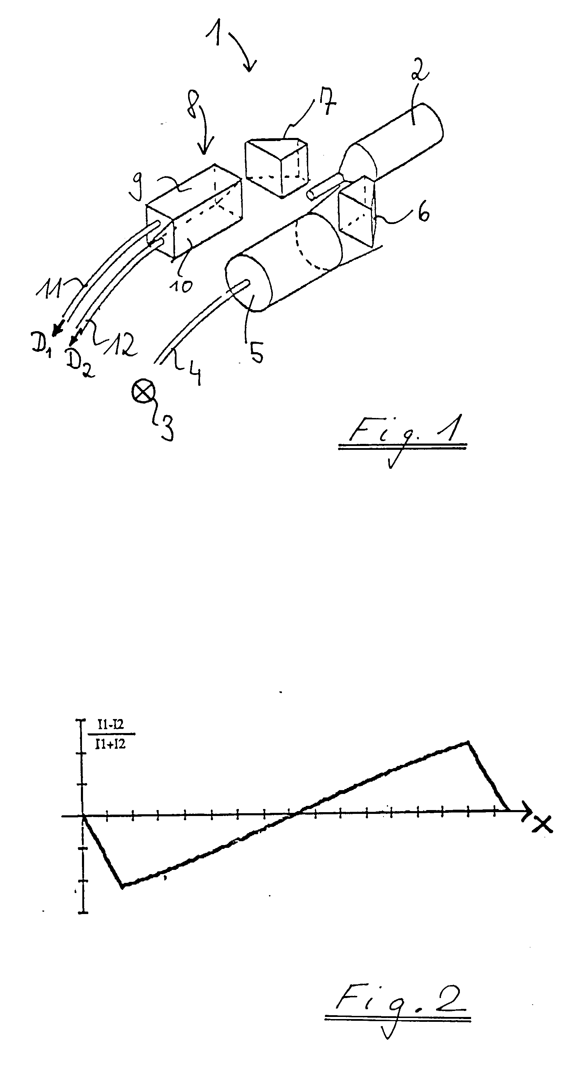

Zunächst sei das Ausführungsbeispiel der Fig. 1 beschrieben. Fig. 1 zeigt eine optische Meßvorrichtung 1 zur Messung und Bestimmung der Position und/oder der Form eines Gegenstandes - hier eine nadelförmige Aufnahmevorrichtung 2 (pin) - für eine Mikrobeschickung mit einem (nicht dargestellten) Zahnrad. Die Meßvorrichtung 1 weist eine (schematisch dargestellte) Lichtquelle 3 - beispielsweise einen auf einer Frequenz ausstrahlenden Laser oder ein LED - auf. Das Licht der Lichtquelle 3 wird über eine Glasfaserleitung 4 sowie eine Linse 5 (bevorzugt eine im Handel erhältliche Selfoclinse oder eine GRIN-Linse, siehe dazu die EP 0 312 056) abgestrahlt.

Das von der Linse 5 parallel ausgestrahlte Licht wird von einem ersten Prisma 6 sowie von einem vom Prisma 6 beabstandeten zweiten Prisma 7 jeweils um 90° umgelenkt. Hinter dem zweiten Prisma 7 fällt das Licht auf eine ebenfalls zur Meßvorrichtung 1 gehörige Sensoranordnung 8. Die Sensoranordnung 8 weist zwei im wesentlichen dreieckig geschliffene, gegenläufig aneinanderliegende Linsen 9, 10 auf, von denen jeweils eine Glasfaserleitung 11, 12 wegführt. Die Glasfaserleitungen leiten einfallendes Licht zwei Detektoren D1, D2 (nicht dargestellt) zu, die ein dem Lichteinfall entsprechendes elektrisches Signal einer (ebenfalls nicht dargestellten) Auswerteeinrichtung zuleiten.

Bei einer Messung und Bestimmung des Ortes der Aufnahmevorrichtung wird die Aufnahmevorrichtung 2 zunächst mit einem aus der Selfoclinse 5 tretendem parallelen Lichtstrahl mit einer gleichmäßigen Intensitätsverteilung beleuchtet. Die Aufnahmevorrichtung 2 wirft über das Prisma 6 einen Schatten auf die zwei symmetrischen, dreieckförmigen Linsen 9, 10, welche aus zylindrischen Selfoclinsen poliert werden. Die Linsen 9, 10 leiten das einfallende Lichtsignal wiederum über die Glasfaserleitungen 11, 12 den zwei Detektoren D1, D2 zu.

Das parallele, in die Linsen einfallende, Licht wird am Eingangsende der zwei Plastikfaserleitungen 11 und 12 gesammelt. Als Detektoren D1 und D2 werden bevorzugt zwei Si-Photodektoren eingesetzt, welche die optischen Intensitäten in elektrische Signale umwandeln.

Die beiden Detektoren D1, D2 detektieren das einfallende Lichtmuster jeweils gesondert, so daß die Differenz zwischen den zwei gemessenen Lichtinsitäten I1 und I2 (entsprechend den Detektoren D1 und D2) linear proportional zur Lage der Aufnahmenadel 2 innerhalb vorgegebener Grenzen eines Detektorfeldes ist. Die Summe der zwei Intensitäten (I1 + I2) ist bei einem gegebenen Nadeldurchmesser ferner unabhängig von der Lage der Nadel 2. Das Summensignal wird daher zur Korrektur der Meßergebnisse bei Lichtintensitätsschwankungen verwendet (Normierung), so daß sich der Ausgangskurvenverlauf als (I1-I2)/(I1+I2) ergibt.

Als Quelle kollimierten Lichtes wird bevorzugt eine lichtemittierende Diode verwendet, deren Licht in die Faserleitung 4 eingekoppelt wird.

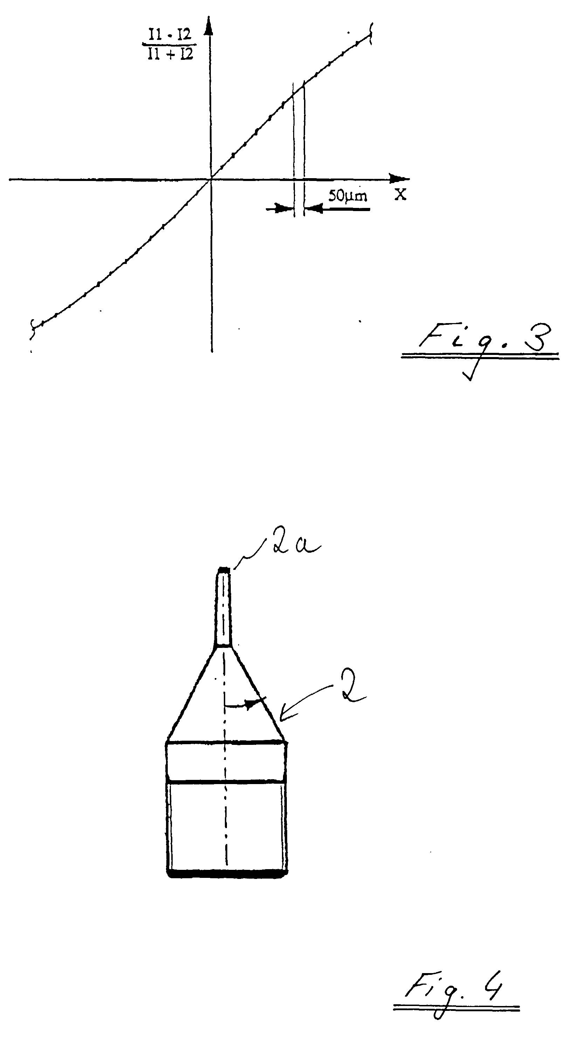

Fig. 2 zeigt den Verlauf des normierten Ausgangssignales (I1-I2)/(I1+I2) als Funktion einer Verschiebung der Aufnahmeeinrichtung 2.

Die optische Meßvorrichtung ist wie folgt kalibrierbar:
1. Die Nadel (bzw. nadelartige Aufnahmevorrichtung) wird im optischen Zentrum des Sensors angeordnet.
2. Die Nadel wird in den Richtungen X+ und X- verschoben, was sich aus der Kurve der Fig. 2 ergibt. In einem inneren Meßbereich von ca. ±500µm beträgt die Linearität typischerweise 50 µm (wobei die Linearität als die maximale Differenz zwischen der besten linearen Ausgleichung und der aktuell ausgemessenen Kurve definiert ist). Um die Genauigkeit der Meßvorrichtung zu verbessern, wird das Ausgangssignal an 40 Nadelpositionen in einem Abstand von 50µm ermittelt und gespeichert, was einen Gesamtmeßbereich von ±1000µm ergibt.
3. Mit einem weiteren Meßaufbau nach Fig. 1, der orthogonal zum Meßaufbau nach Fig. 1 angeordnet ist, wird der Kalibriervorgang in Y-Richtung wiederholt.

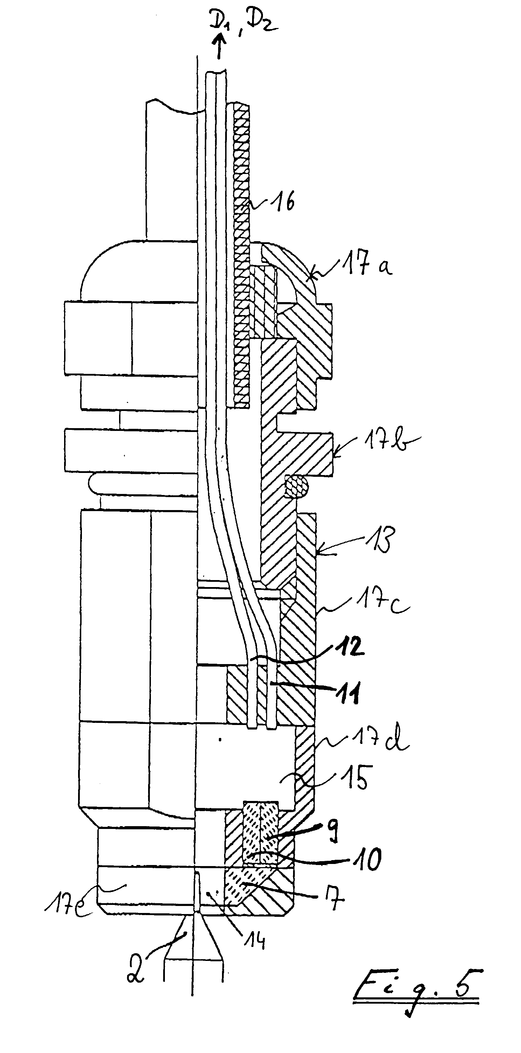

Fig. 4 zeigt eine nadelförmige Aufnahmevorrichtung zur Aufnahme kleiner Zahnräder bei der Uhrenmontage. Der Durchmesser des oberen Nadelabschnittes 2a hat einen Durchmesser von ca. 0,4-0,6 mm.

Fig. 5 zeigt in teilweise geschnittener Ansicht beispielhaft einen Aufbau eines Meßkopfes 13, wie er auch in der Praxis zum Einsatz kommt. Gut zu erkennen sind die in eine Einführöffnung 14 des Kopfes eingeführte Nadel 2, das Prisma 7 sowie die Sensorlinsen 9 und 10, welche im vorliegenden Fall über eine Kopplungseinheit 15 an die Glasfaserleitungen 11 und 12 angeschlossen sind.

Mittels zweier Meßanordnungen sind sowohl die X- als auch die Y-Richtung ausmeßbar. Die Plastikfaserleitungen werden von oben her durch einen Schlauch 16 dem Meßkopf 13 zugeführt. Der Meßkopf 13 weist ferner ein die optisch aktiven Elemente schützendes mehrteiliges Außengehäuse 17a-e auf.

Die Meßvorrichtung wird bei einer bevorzugten Ausführungsform wie folgt ausgelegt: Kabellänge 1m; Kopfmaterial: rostfreier Stahl; Kopfabmessungen: Durchmesser 14mm, Länge 33 mm, Gewicht 35g; Einstecköffnung: 3*3mm Optische Fensterabmessungen: Höhe: 0,2mm, Breite 2,4 mm.

Bei dieser Auslegung lassen sich beispielsweise Zylinderweiten von 0,2 bis 1 mm in einem Verschiebebereich von 8 bis 2µm erfassen.

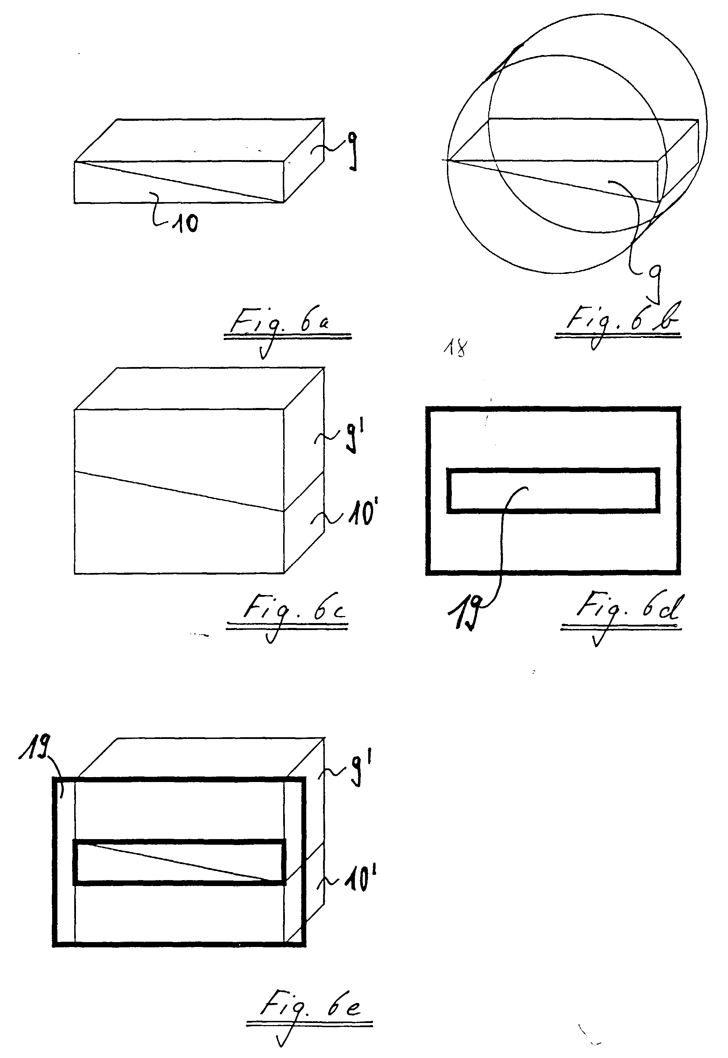

Fig. 6 veranschaulicht perspektivische Ansichten verschiedener Sensorlinsen 9,10. In Fig. 6a sind zwei aus Selfoc-Zylinderlinsen (siehe Fig. 6b) dreieckförmig polierte Sensorlinsen zu erkennen. Da das Polieren der Linsen extrem präzise fein erfolgen muß, ist eine leichter zu schleifende Linsenform wünschenswert. Diesem Problem schafft das Ausführungsbeispiel leicht herzustellender trapezförmig polierter Sensorlinsen 9', 10' in Fig. 6c Abhilfe. Fig. 6d zeigt eine Maske 18 mit einer rechteckigen Öffnung 19. Wenn die Maske 19 nach Art der Fig, 6e auf die Linsen 9', 10' gesetzt ist, ergibt sich eine optisch aktive Linseneinfallsfläche, mit der ebenfalls sehr gute Meßergebnisse erzielbar sind.

## Patentansprüche

1. Optische Fein- und/oder Mikrobeschickungsmeßvorrichtung zur Positionierung um eine Aufnahmevorrichtung herum:
a) mit einem durch eine Lichtquelle (3) und eine Sensoranordnung (8) begrenzten Erfassungsbereich, der zur Messung an dem Ort der Aufnahmevorrichtung positioniert wird;
b) wobei die Sensoranordnung (8) derart ausgelegt ist, daß sie ein Ausgangssignal liefert, das im mathematischen Sinn umkehrbar eindeutig von der Lage und/oder Form der Aufnahmevorrichtung innerhalb der Sensoranordnung (8) abhängt;
c) mit einer Auswerteeinrichtung zur Bestimmung der Lage und/oder der Form der Aufnahmevorrichtung, wobei die optische Meßvorrichtung um die Aufnahmevorrichtung herum positioniert ist.

2. Optische Fein- und/oder Mikrobeschickungsmeßvorrichtung nach Anspruch 1 mit wenigstens einer der Lichtquelle (3) und/oder der Sensoranordnung (8) zugeordneten optischen Ablenkeinheit, insbesondere nach Art eines Ablenkreflektors.

3. Optische Fein- und/oder Mikrobeschickungsmeßvorrichtung nach Anspruch 1 oder 2 mit zwei winklig zueinander angeordneten Meßeinheiten mit jeweils einer Lichtquelle (3) und einem Sensor (8).

4. Optische Fein- und/oder Mikrobeschickungsmeßvorrichtung nach einem der vorstehenden Ansprüche, wobei die Meßeinheiten orthogonal zueinander in einem zu einer seiner Seiten hin offenen Meßkopf (13) angeordnet sind, so daß der Meßkopf (13) über die auszumessende Aufnahmevorrichtung führbar ist.

5. Optische Fein- und/oder Mikrobeschickungsmeßvorrichtung nach einem der vorstehenden Ansprüche, wobei der/die Sensor(en) (8) zwei gegenläufig dreieckförmige optische Einrichtungen - insbesondere Linsen (9, 10) - aufweist, die über eine Kopplungseinrichtung 15 jeweils an eine Glasfaserleitung (11, 12) angeschlossen sind.

6. Optische Fein- und/oder Mikrobeschickungsmeßvorrichtung nach einem der vorstehenden Ansprüche, wobei die Eintrittsebenen trapezförmig ausgelegter Linsen (9', 10') mit einer eine rechtwinklige Öffnung (19) aufweisenden Maske (18) abgedeckt sind.

7. Optische Fein- und/oder Mikrobeschickungsmeßvorrichtung nach einem der vorstehenden Ansprüche, wobei der wenigstens eine Reflektor als Prisma (6, 7) ausgebildet ist.

8. Optische Fein- und/oder Mikrobeschickungsmeßvorrichtung nach einem der vorstehenden Ansprüche, mit einer an zwei Detektoren angeschlossenen Auswertungseinrichtung, die zur Bestimmung der Lage des Objektes im Raum ausgelegt ist.

9. Optische Fein- und/oder Mikrobeschickungsmeßvorrichtung nach einem der vorstehenden Ansprüche, welche an einem Roboterarm angeordnet ist.

10. Optische Fein- und/oder Mikrobeschickungsmeßvorrichtung nach einem der vorstehenden Ansprüche, wobei die Lichtquelle (3) einen auf einer Frequenz ausstrahlenden Laser oder eine lichtemittierende Diode aufweist, deren Licht durch eine Glasfaserleitung (4) sowie eine Linse (5) leitbar ist.

11. Optische Fein- und/oder Mikrobeschickungsmeßvorrichtung nach einem der vorstehenden Ansprüche, wobei die Linsen der Sensoranordnung (8) gegenläufig aneinanderliegen, wobei jeweils eine Glasfaserleitung (11, 12) von den Linsen (9, 10) wegführt.

12. Verfahren zur Bestimmung der Lage und/oder der Form einer mit einem Körper zu beschickenden Aufnahmevorrichtung bei der Mikromontage/Mikrobeschickung mittels einer optischen Meßvorrichtung, bei welchem:
a) für die Messung der Erfassungsbereich der optischen Meßvorrichtung an dem Ort der Aufnahmevorrichtung positioniert wird,
b) ein Ausgangssignal der optischen Meßvorrichtung erfaßt wird, das im mathematischen Sinn umkehrbar eindeutig von der Lage und/oder Form der Aufnahmevorrichtung innerhalb des Erfassungsbereichs abhängt; und
c) im Erfassungsbereich die Lage und/oder die Form der Aufnahmevorrichtung bestimmt wird.

13. Verfahren nach Anspruch 12, wobei anhand der Meßsignale zunächst bestimmt wird, ob eine Aufnahmevorrichtung vorhanden ist, woraufhin ggf. ein Vergleich deren Lage mit einem vorgegebenen Toleranzbereich und eine genaue Bestimmung der Lage des Stifts und ggf. eine Ermittlung eines Korrekturwertes erfolgt.

14. Verwendung einer optischen Fein- und/oder Mikrobeschickungsmeßvorrichtung nach einem der Ansprüche 1 bis 11 zur Messung der Lage eines von einem Industrieroboter zu bearbeitenden Gegenstandes.

15. Roboterarm mit einer optischen Fein- und/oder Mikrobeschickungsmeßvorrichtung nach einem der Ansprüche 1 bis 11.

## Claims

1. An optical precision and/or micro charging measuring device for positioning around a mounting device:
a) with a detection range limited by a light source (3) and a sensor arrangement (8), which is positioned for the measurement at the site of the mounting device;
b) wherein the sensor arrangement (8) is designed in such a manner that it supplies an output signal which, reversibly in the mathematical sense, clearly depends on the position and/or shape of the mounting device inside the sensor arrangement (8);
c) with an evaluating device for determining the position and/or the shape of the mounting device, wherein the optical measuring device is positioned around the mounting device.

2. An optical precision and/or micro charing measuring device according to Claim 1 having at least one optical deflection unit associated with the light source (3) and/or the sensor arrangement (8), in particular in the manner of a deflecting reflector.

3. An optical precision and/or micro charging measuring device according to Claim 1 or 2 having two measuring units disposed at an angle to one another, each having a light source (3) and a sensor (4).

4. An optical precision and/or micro charging measuring device according to one of the preceding Claims, wherein the measurement units are disposed orthogonally to one another in a test probe (13) open at one of its sides, so that the test probe (13) can be guided over the mounting device to be measured.

5. An optical precision and/or micro charging measuring device according to one of the preceding Claims, wherein the sensor/sensors (8) comprises two opposed triangular optical instruments - in particular lenses (9, 10) - , which are each connected via a coupling device 15 to a glass/optical fibre cable (11, 12).

6. An optical precision and/or micro charging measuring device according to one of the preceding Claims, wherein the planes of incidence of trapezoidally designed lenses (9', 10') are covered with a mask (18) having a rectangular opening (19).

7. An optical precision and/or micro charging measuring device according to one of the preceding Claims, wherein the at least one reflector is constructed as a prism (6, 7).

8. An optical precision and/or micro charging measuring device according to one of the preceding Claims, having an evaluation unit connected to two detectors, which is designed to determine the position of the object in the space.

9. An optical precision and/or micro charging measuring device according to one of the preceding Claims, which is disposed on a robot arm.

10. An optical precision and/or micro charging measuring device according to one of the preceding Claims, wherein the light source (3) comprises a laser radiating at a frequency or a light-emitting diode, the light of which can be conducted through an optical fibre cable (4) and also a lens (5).

11. An optical precision and/or micro charging measuring device according to one of the preceding Claims, wherein the lenses of the sensor arrangement (8) lie opposed and next to one another, wherein an optical fibre cable (11, 12) leads away from the lenses (9, 10).

12. A method for determining the position and/or the shape of a mounting device to be charged with a body during micro mounting/micro charging by means of an optical measuring device, in which:
a) for the measurement the detection range of the optical measuring device is positioned at the site of the mounting device,
b) an output signal of the optical measuring device is detected, which, reversibly in the mathematical sense, clearly depends on the position and/or the shape of the mounting device inside the detection range; and
c) the position and/or the shape of the mounting device is determined in the detection range.

13. A method according to Claim 12, wherein by means of the measured signals it is firstly determined whether a mounting device is present, whereupon if necessary a comparison of its position with a predetermined tolerance range and a precised determination of the position of the pin and where appropriate a determination of a correction value occurs.

14. Use of an optical precision and/or micro charging measuring device according to one of Claims 1 to 11 for the measurement of the position of an object to be handled by an industrial robot.

15. A robot arm having an optical precision and/or micro charging measuring device according to one of Claims 1 to 11.

## Revendications

1. Dispositif de mesure optique concernant le chargement de précision et/ou le microchargement pour le positionnement tout autour d'un dispositif de préhension :
a) comprenant une plage de détection limitée par une source lumineuse (3) et un agencement de capteurs (8), plage de détection qui est positionnée pour mesurer au niveau de l'emplacement du dispositif de préhension;
b) où l'agencement de capteurs (8) est conçu de façon telle qu'il fournit un signal de sortie qui dépend de la position et/ou de la forme du dispositif de préhension à l'intérieur de l'agencement de capteurs (8) et qui peut être inversé, au sens mathématique, de façon univoque;
c) comprenant un dispositif de traitement pour déterminer la position et/ou la forme du dispositif de préhension, où le dispositif de mesure optique est positionné tout autour du dispositif de préhension.

2. Dispositif de mesure optique concernant un chargement de précision et/ou un microchargement selon la revendication 1, comportant au moins une unité de déviation optique associée à la source lumineuse (3) et/ou à l'agencement de capteurs (8), notamment à la façon d'un réflecteur de déviation.

3. Dispositif de mesure optique concernant un chargement de précision et/ou un microchargement selon la revendication 1 ou 2, comprenant deux unités de mesure disposées de façon angulaire l'une par rapport à l'autre et comportant chacune une source lumineuse (3) et un capteur (8).

4. Dispositif de mesure optique concernant un chargement de précision et/ou un microchargement selon l'une quelconque des revendications précédentes, où les unités de mesure sont disposées de façon orthogonale l'une par rapport à l'autre dans une tête de mesure (13) ouverte sur un de ses côtés, de sorte que la tête de mesure (13) peut être déplacée au-dessus du dispositif de préhension à mesurer.

5. Dispositif de mesure optique concernant un chargement de précision et/ou un microchargement selon l'une quelconque des revendications précédentes, où le ou les capteurs (8) présente(nt) deux dispositifs optiques de forme triangulaire et de sens opposé - notamment des lentilles (9, 10) - qui sont reliés chacun à un câble (11, 12) en fibres de verre, via un dispositif de couplage (15).

6. Dispositif de mesure optique concernant un chargement de précision et/ou un microchargement selon l'une quelconque des revendications précédentes, où les niveaux d'admission des lentilles (9', 10') conçues en forme de trapèze sont recouvertes par un masque (18) présentant une ouverture rectangulaire (19).

7. Dispositif de mesure optique concernant un chargement de précision et/ou un microchargement selon l'une quelconque des revendications précédentes, où au moins un réflecteur est configuré comme un prisme (6, 7).

8. Dispositif de mesure optique concernant un chargement de précision et/ou un microchargement selon l'une quelconque des revendications précédentes, comportant un dispositif de traitement relié à deux détecteurs, lequel dispositif de traitement est conçu pour déterminer la position de l'objet dans l'espace.

9. Dispositif de mesure optique d'un chargement de précision et/ou d'un microchargement selon l'une quelconque des revendications précédentes, lequel dispositif de mesure est disposé sur le bras d'un robot.

10. Dispositif de mesure optique concernant un chargement de précision et/ou un microchargement selon l'une quelconque des revendications précédentes, où la source lumineuse (3) présente un laser émettant sur une fréquence ou une diode électroluminescente, laser ou diode dont la lumière peut être acheminée par un câble en fibres de verre (4) ainsi que par une lentille (5).

11. Dispositif de mesure optique concernant un chargement de précision et/ou un microchargement selon l'une quelconque des revendications précédentes, où les lentilles de l'agencement de capteurs (8) sont contiguës entre elles et de sens opposé, un câble (11, 12) en fibres de verre partant à chaque fois des lentilles (9, 10).

12. Procédé pour déterminer la position et/ou la forme d'un dispositif de préhension à charger avec un corps lors du micromontage/microcharge, au moyen d'un dispositif de mesure optique, procédé dans lequel :
a) pour le processus de mesure, la plage de détection du dispositif de mesure optique est positionnée là où se trouve le dispositif de préhension,
b) un signal de sortie du dispositif de mesure optique est capté, lequel signal de sortie dépend de la position et/ou de la forme du dispositif de préhension à l'intérieur de la plage de détection et qui peut être inversé, au sens mathématique, de façon univoque ; et
c) la position et/ou la forme du dispositif de préhension est déterminée dans la plage de détection.

13. Procédé selon la revendication 12 où, au moyen des signaux de mesure, on détermine d'abord si un dispositif de préhension est existant, après quoi, le cas échéant, on compare la position du dispositif de préhension à une plage de tolérance prédéterminée et on définit de façon précise la position de la cheville et, le cas échéant, on détermine une valeur de correction.

14. Utilisation d'un dispositif de mesure optique concernant un chargement de précision et/ou un microchargement selon l'une quelconque des revendications 1 à 11, pour mesurer la position d'un objet à traiter par un robot industriel.

15. Bras de robot comprenant un dispositif de mesure optique concernant un chargement de précision et/ou un microchargement selon l'une quelconque des revendications 1 à 11.
